Europäisches Patentamt

European Patent Office

Office européen des brevets

(19)

(11) EP 0 803 401 B1

(12) EUROPEAN PATENT SPECIFICATION

(45) Date of publication and mention
of the grant of the patent:
04.10.2001 Bulletin 2001/40

(51) Int Cl.7: **B60Q 1/115**

(21) Application number: 97106477.9

(22) Date of filing: 18.04.1997

(54) **Apparatus for automatically controlling a direction of an optical axis of a vehicle headlight**

Einrichtung zur automatischen Steuerung der optischen Achse eines Kfz-Scheinwerfers

Dispositif pour commander automatiquement la direction de l'axe optique d'un phare de véhicule

(84) Designated Contracting States:
**DE FR IT**

(30) Priority: **22.04.1996 JP 9975396**

(43) Date of publication of application:
**29.10.1997 Bulletin 1997/44**

(73) Proprietor: **DENSO CORPORATION**
**Kariya-City Aichi-Pref. 448 (JP)**

(72) Inventors:
• **Okuchi, Hiroaki**
**Kariya-shi, Aichi 448 (JP)**

• **Ido, Noriyuki**
**Kariya-shi, Aichi 448 (JP)**

(74) Representative:
**Winter, Brandl, Fürniss, Hübner, Röss, Kaiser,**
**Polte Partnerschaft**
**Patent- und Rechtsanwaltskanzlei**
**Alois-Steinecker-Strasse 22**
**85354 Freising (DE)**

(56) References cited:
**DE-A- 3 129 891      DE-A- 4 105 716**
**DE-C- 4 005 812      FR-A- 2 297 153**
**FR-A- 2 339 513**

## Description

The present invention relates to an apparatus for automatically controlling a direction of an optical axis of a vehicle headlight.

So far, a vehicle headlight has been required to control a direction of an optical axis of the headlight, because illumination of the headlight dazzles a driver driving a vehicle facing the headlight for a moment if the direction of the optical axis turns upward due to an inclination of the vehicle, or the faraway visibility may be poor if the direction of the optical axis turns downward due to a declination of the vehicle. Apparatuses that solve this problem are disclosed in JP-A-5-229383, JP-A-5-250901, and JP-A-6-32169; however, these apparatuses are complex and expensive.

There is another apparatus that solves this problem by using multiple height sensors disposed between an axle and a body of the vehicle for detecting the relative height displacement of the vehicle; however, this apparatus is also expensive because it needs multiple height sensors.

In DE 31 29 891 A1 there is disclosed a control apparatus of said type which comprises at least one sensor for detecting a pitch angle of a vehicle wherein the optical axis of the vehicle is controlled by filtering the respectively detected pitch angle by using a low-pass filter. This low-pass filter is able to change a frequency interruption characteristic which depends on. the amplitude of the pitch angle signal. If the amplitude is lower than a threshold value corresponding to the acceleration/deceleration, the frequency interruption characteristic becomes 0.15 hertz; on the other hand, if the amplitude is higher than this threshold value the frequency interruption characteristic is in the range of 1 and 2 hertz. In this way, this known apparatus removes a high frequency component which goes back to the roughness of the road, thereby preventing any deviation of the optical axis by controlling the pitch angle which is caused by the acceleration/deceleration of the vehicle. This known control apparatus, however, also needs plural height sensors in order to be able to control the direction of the optical axis.

In view of the above problems of the prior art, the object of the present invention is to provide a simple and inexpensive apparatus for automatically controlling a direction of an optical axis of a vehicle headlight, and especially to provide an apparatus which automatically controls a direction of an optical axis of the vehicle headlight based on outputs from a single height sensor disposed in the vehicle.

In order to accomplish the above-described objects in the present invention, a first vertical displacement at one longitudinal side of a vehicle is outputted from a single height detecting device, and a second vertical displacement at the other longitudinal side of the vehicle is estimated based on the first vertical displacement outputted from the single height detecting device;

thus, the inclination is calculated based on the second vertical displacement at the other longitudinal side of the vehicle and the first vertical displacement outputted from the single height detecting device; therefore the inclination is nearly the same as an inclination calculated by an apparatus which has multiple sensors. Therefore, the apparatus according to the present invention can properly control the direction of the optical axis of the headlight without needing multiple height sensors in the vehicle.

Additional objects and advantages of the present invention will be more readily apparent from the following detailed description of preferred embodiments thereof when. taken together with the accompanying drawings, in which:

FIG. 1 is a schematic view illustrating an apparatus for automatically controlling a direction of an optical axis of a vehicle headlight according to a first preferred embodiment of the present invention;

FIG. 2 is a schematic view illustrating a basic structure of a vehicle headlight assembly according to the first embodiment;

FIG. 3 is a schematic diagram illustrating a position of a body and a suspension of vehicle in which the first embodiment is used under acceleration;

FIG. 4 is a flowchart of processing in a CPU disposed in an ECU according to the first embodiment;

FIG. 5 is a schematic view illustrating an apparatus for automatically controlling the direction of the optical axis of a vehicle headlight according to a second preferred embodiment of the present invention; and

FIG. 6 is a flowchart of processing in the CPU disposed in the ECU according to the second embodiment.

Preferred embodiments of the present invention are described hereinafter with reference to the accompanying drawings.

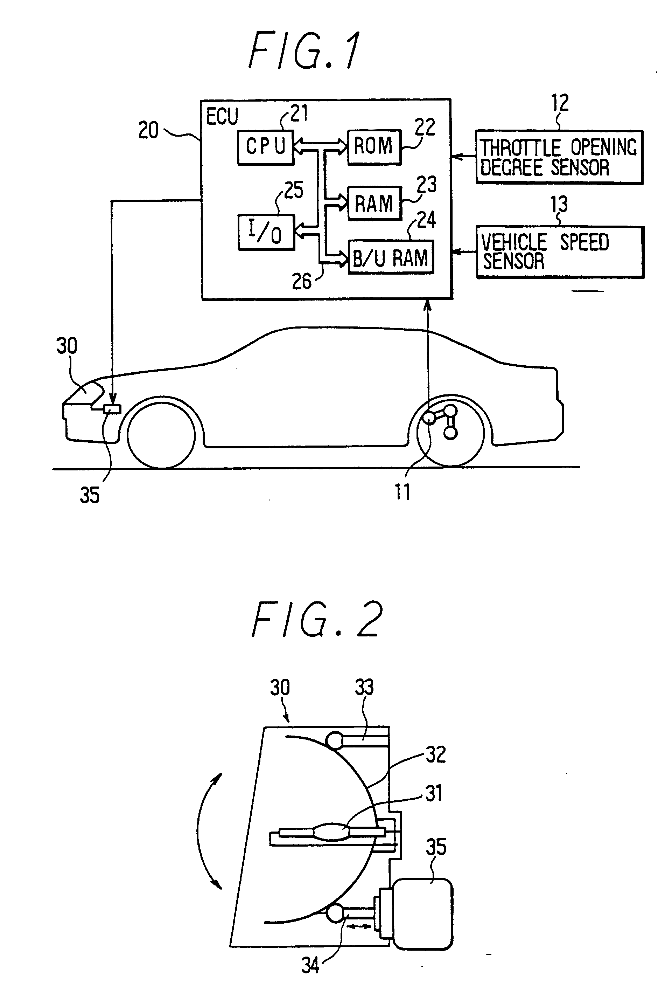

FIG. 1 is a schematic view illustrating an apparatus for automatically controlling a direction of an optical axis of a vehicle headlight according to a first preferred embodiment of the present invention.

As shown in FIG. 1, a height sensor 11 is disposed between a rear axle and a body of a vehicle, and a throttle opening degree sensor (throttle angle sensor) 12, a vehicle speed sensor 13, and other sensors (not shown) are also disposed in the vehicle. This height sensor 11 outputs a rear height signal HR (height displacement at a side of the vehicle rear wheels) as relative height displacement between the rear axle and the body, the throttle opening degree sensor 12 outputs a throttle opening degree signal (throttle angle signal) TA, and the vehicle speed sensor 13 outputs a vehicle speed signal VSP. Sensor signals, for instance, the rear height signal HR, the throttle opening degree signal TA, and the vehicle speed signal VSP outputted from the sensors are inputted to an ECU (Electronic Control Unit) 20 disposed in the vehicle. The ECU 20 is illustrated out of the vehicle as shown in FIG. 1 for convenience, as are the throttle opening degree sensor 12 and the vehicle speed sensor 13.

The ECU 20 includes a CPU 21 as a central processing unit, ROM 22 storing a processing program, RAM 23 for recording several data, B/U (Back Up) RAM 24, I/O interface 25, and bus line 26 connecting all of them together. Output signals from ECU 20 are inputted to an actuator 35 disposed next to a vehicle headlight 30, and a direction of an optical axis of the vehicle headlight 30 is controlled as described later. Sensor signals outputted from sensors, for instance, the throttle opening degree sensor 12 and the vehicle speed sensor 13, are used to determine the state of the vehicle, for instance, running state, stopped state, accelerating state, and decelerating state. There are four wheels on the vehicle, two of which are shown in FIG. 1.

FIG. 2 is a schematic view illustrating a basic structure of the headlight 30. As shown in FIG. 2, the headlight 30 includes a lamp 31, a reflector 32 which fixes the lamp 31 in place, supporting part 33 which supports an upper part of the reflector 32 so that the reflector 32 can swing in the direction shown by the arrow illustrated as a circular arc, movable part 34 which supports the lower part of the reflector 32, and actuator 35, for instance a step motor, which shifts the movable part 34 in the direction shown by the arrow illustrated as a straight line. The direction of the optical axis of the headlight 30 is previously set up to provide optimum illumination for the vehicle's drivers.

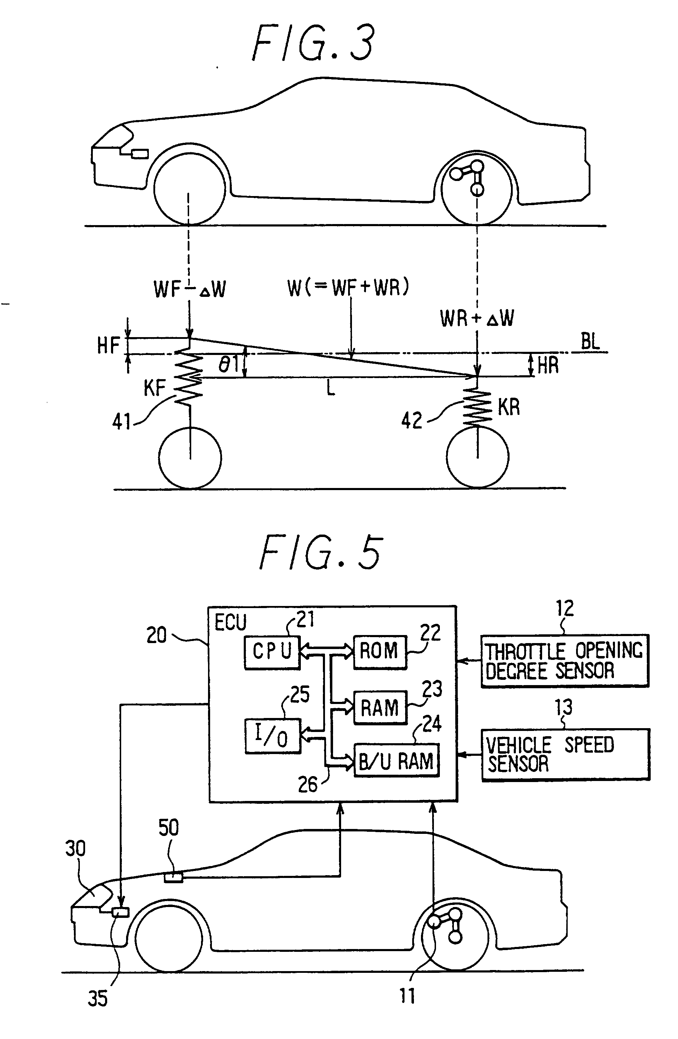

FIG. 3 is a schematic diagram illustrating a position of a body and a suspension of the vehicle under acceleration. When the vehicle is under acceleration, as shown in FIG. 3, a front suspension 41 disposed at a end of the vehicle front wheels extends upwardly and a rear suspension 42 disposed at the side of the vehicle rear wheels compresses because a load of the vehicle moves to the back of the vehicle. In the running state, because passengers and baggage in the vehicle should be unmoved and a total load of the vehicle W (= a load at a front side of the vehicle WF + a load at the rear side of the vehicle WR) should be unchanged, front height HF (height displacement at a side of the vehicle front wheels) as relative height displacement between a front axle and the body is calculated as follows, based on the rear height signal HR outputted from the height sensor 11.

First, the load movement toward the rear wheel $\Delta W$ is calculated by the following Equation (1), where KF is the spring constant of the front suspension 41, and KR is the spring constant of the rear suspension 42.

$$\Delta W = HR \times KR \times 2 \qquad (1)$$

Because there are a right rear wheel and a left rear wheel in the vehicle, "$\times 2$" is needed in above equation.

The load movement toward the front wheel is the same as the load movement toward the rear wheel $\Delta W$ except for the sign of the above load movement $\Delta W$, and the sign is opposite because the load moves to the back of the vehicle in this state, so the front height HF is calculated by the following Equation (2).

$$HF = -\Delta W / (KF \times 2) = -(HR \times KR) / KF \qquad (2)$$

Because there are a right front wheel and a left front wheel in the vehicle, "$\times 2$" is needed in above equation.

According to the above equations, a pitch angle $\theta 1$ as an inclination with respect to the reference plane previously set and extending across the vehicle is calculated by the following Equation (3), where L is a distance between the front axle and the rear axle.

$$\theta 1 = \tan^{-1}\{(HF - HR) / L\} \qquad (3)$$

In FIG 3, distance and angles above the reference plane will be deemed to have positive polarity, while distance and angles below the reference plane will be deemed to have negative polarity. Thus, distances HF and HR will always have opposite signs.

Therefore, a control angle for the direction of the optical axis $\theta 2$ such that illumination of the headlight 30 does not dazzle a driver driving another vehicle facing the headlight 30 is nearly the same as the pitch angle $\theta 1$, and the sign of angle is opposite to that of $\theta 1$ because the load moves to back of the vehicle, so the actuator 35 is operated and the direction of the optical axis of the headlight 30 is controlled based on the angle $\theta 2$.

On the other hand, when the vehicle is under deceleration, the front suspension 41 compresses and the rear suspension 42 extends because the load moves to the front of the vehicle, then the pitch angle $\theta 1$ and the control angle for the direction of the optical axis $\theta 2$ can be calculated in the same manner as Equations (1)-(3).

When the rear height signal HR is not constant although vehicle is in the stopped state, the number of passengers or items of baggage in the vehicle should be increasing or decreasing. In this situation, because height displacement at the rear side changes more than at the front side, the front height HF is estimated by the following Equation (4), based on the rear height signal HR.

$$HF = HR \times \alpha \qquad (4)$$

where $\alpha$ is a correction coefficient in the range of 0 to $\pm 2$, which depends on the rigidity of the front suspension 41. For instance, when $\alpha$ is zero, the front height HF is regarded as having no displacement. After that, the pitch angle θ1 and the control angle for the direction of the optical axis θ2 can be calculated in the same manner as above.

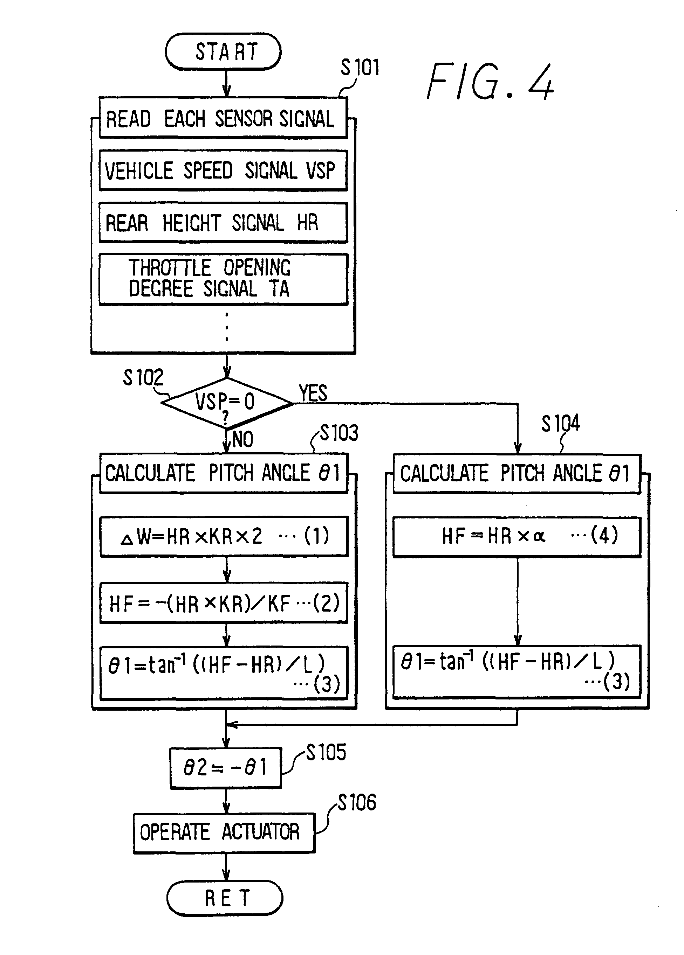

FIG. 4 is a flowchart of processing in the CPU 21 disposed in the ECU 20 according to the first embodiment. First, Step S101 reads sensor signals, for instance, the throttle opening degree signal TA, the vehicle speed signal VSP, and the rear height signal HR. Step S102 determines whether or not the vehicle speed signal VSP read by Step S101 is zero. If Step S102 determines the vehicle speed signal VSP is not zero, the vehicle should be in the running state, so Step S103 calculates the pitch angle θ1 based on Equations (1) -(3).

On the other hand, If Step S102 determines the vehicle speed signal VSP is zero, the vehicle should be in the stopped state, so Step S104 calculates the pitch angle θ1 based on Equations (3) and (4). After Step S103 or S104, Step S105 calculates the control angle for the direction of the optical axis θ2. Next, Step S106 operates the actuator 35 based on the control angle for the direction of the optical axis θ2 calculated by Step S105, and then, the direction of the optical axis of headlight 30 is properly controlled responsive to the state of the vehicle (running state and stopped state). The way of operating the actuator 35, for instance, controlling speed of the actuator 35, is omitted for brevity.

According to the this embodiment, because the pitch angle θ1 is calculated based on the output from the single height sensor 11 and the control angle for the direction of the optical axis of headlight θ2 is calculated based on the pitch angle θ1, the apparatus can properly control the direction of the optical axis of the headlight 30 although there are not multiple height sensors in the vehicle. Furthermore, because the height sensor 11 is disposed between the rear axle and the body of the vehicle, and rear height displacement at the rear side is detected by the height sensor 11, it is easier to detect increase and decrease of passengers and baggage in the vehicle than a case that the height sensor 11 is disposed between the front axle and the body of the vehicle. Because the front height HF is estimated based on the rear height signal HR, and the pitch angle θ1 as the inclination is calculated based on the rear height signal HR outputted from the height sensor 11 and the front height HF estimated based on the rear height signal HR, so the pitch angle θ1 is nearly the same as an inclination calculated by an apparatus which has multiple sensors. Because the pitch angle θ1 is responsive to the state of the vehicle, the control angle for the direction of the optical axis θ2 can be adapted to the state of the vehicle.

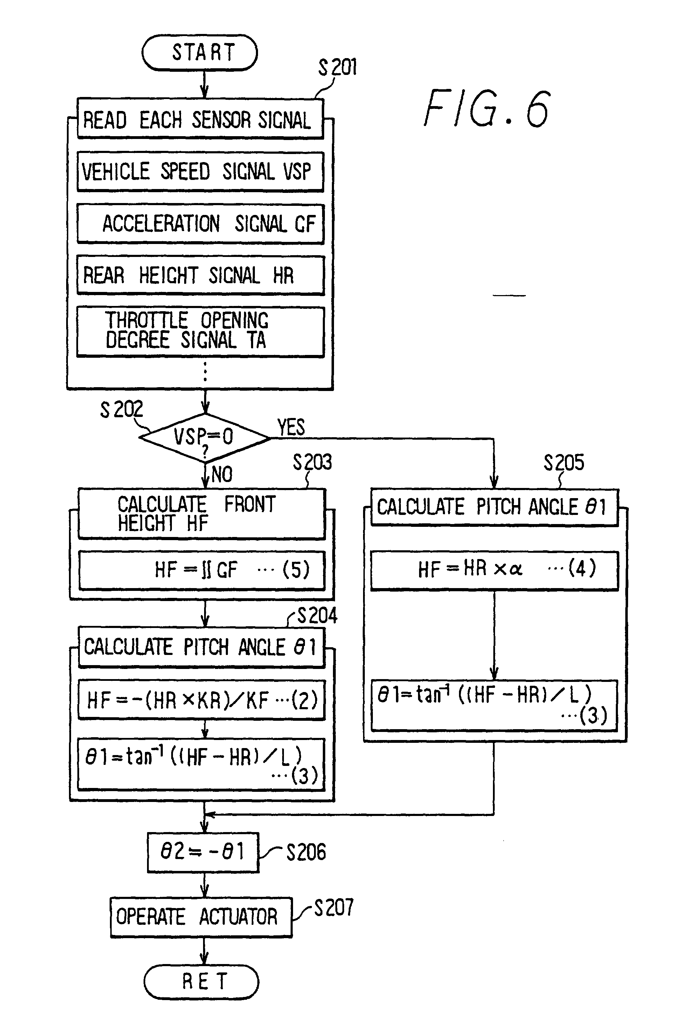

FIG. 5 is a schematic view illustrating an apparatus for automatically controlling the direction of the optical axis of the vehicle headlight according to a second preferred embodiment of the present invention. In this embodiment, the structure of the apparatus is the same as in the first embodiment except for an acceleration sensor 50, so the same parts as the apparatus described in the first embodiment are denoted by the same signs as the apparatus described in the first embodiment and repeated description is omitted for brevity.

As shown in FIG. 5, an acceleration sensor 50 which detects vertical acceleration of the vehicle is disposed next to the front axle of the vehicle. When the front of the vehicle is shifted up and down by means of a sudden start or a sudden stop, an acceleration signal GF is outputted from the acceleration sensor 50 to the ECU 20.

FIG. 6 is a flowchart of processing in the CPU 21 disposed in the ECU 20 according to the second embodiment. First, Step S201 reads sensor signals, for instance, the throttle opening degree signal TA, the vehicle speed signal VSP, the acceleration signal GF, and the rear height signal HR. Step S202 determines whether or not the vehicle speed signal VSP read by Step S201 is zero. If Step S202 determines the vehicle speed signal VSP is not zero, the vehicle should be in the running state, so Step S203 calculates the front height HF by following Equation (5).

$$HF = \iint GF \qquad (5)$$

That is, Step S203 double integrates the acceleration signal GF. In this case, because the rear height sensor 11 is disposed in the vehicle, it is possible to calculate the front height HF based on the rear height signal HR as well as the first embodiment, so it is possible to adapt other ways to get the front height HF, for instance, first, choosing the bigger one or smaller one between the front height HF based on Equation (5) and the front height HF based on Equation (2); second, calculating an average of the front height HF based on Equation (5) and the front height HF based on Equation (2); third, improving the accuracy of calculation of the front height HF based on Equation (2) by the front height HF based on Equation (5). Next, Step S204 calculates the pitch angle θ1 based on Equations (2) and (3).

On the other hand, If Step S202 determines the vehicle speed signal VSP is zero, the vehicle should be in the stopped state, so Step 504 calculates the pitch angle θ1 based on Equations (4) and (3). After Step S204 or S205, Step S206 calculates the control angle for the direction of the optical axis θ2. Next, Step S207 operates the actuator 35 based on the control angle for the direction of the optical axis θ2 calculated by Step S206, and then, the direction of the optical axis of headlight 30 is properly controlled responsive to the state of the vehicle as in the first embodiment.

According to the second embodiment, the acceleration sensor 50 is disposed in the vehicle and because the front height HF which is calculated based on not only the rear height signal HR but also the acceleration signal GF from the acceleration sensor 50 is used for calculating the pitch angle θ1, the front height HF is calculated more accurately, and the direction of the optical axis of the headlight is controlled more properly. Particularly, if the acceleration sensor 50 is previously disposed in the vehicle as a part of another vehicle control apparatus, it is easy to adapt the second embodiment.

The present invention may be embodied in other specific forms without departing from the spirit or essential characteristics thereof. For instance, it is possible to determine the state of the vehicle based on a state of an internal combustion detected by some sensors including the throttle opening degree sensor 12. It is possible to dispose the height sensor 11 not at the rear side of the vehicle but at the front side of the vehicle. It is possible to determine the state of the vehicle by using the acceleration signal GF, and improve the pitch angle θ1 based on the determination of the state of the vehicle.

The present embodiments are therefore to be considered in all respects as illustrative and not restrictive, the scope of the invention being indicated by the appended claims rather than by the foregoing description.

## Claims

1. An apparatus for automatically controlling a direction of an optical axis of a vehicle headlight (30), said apparatus comprising:

    height detecting means (11) disposed at one longitudinal side of a vehicle, for detecting a first vertical displacement (HR) of said vehicle at said one longitudinal side;
    displacement estimating means (S103, S203) for estimating a second vertical displacement (HF) at the other longitudinal side of said vehicle where said height detecting means (11) is not disposed, based on said first vertical displacement (HR) of said vehicle at said one longitudinal side;
    inclination calculating means (S103-S105, S204-S206) for calculating inclinations (θ1, θ2) against a reference plane extending in a direction of said optical axis of said vehicle headlight based on said first vertical displacement (HR) of said vehicle at said one longitudinal side of said vehicle and said second vertical displacement (HF) of said vehicle at said other longitudinal side of said vehicle; and
    control means (S106, S207, 35) for controlling said optical axis of said vehicle headlight (30) based on one of said inclinations (θ2) calculated by said inclination calculating means (S103-S105, S204-S206)
    wherein said height detecting means (11) consists of a single height sensor.

2. An apparatus according to claim 1, wherein said height detecting means (11) is disposed at a rear side of said vehicle.

3. An apparatus according to claim 1 or 2, further comprising:

    state detecting means (S102, S202) for detecting an operational state of said vehicle;
    wherein said inclination calculating means (S103-S105, S204-S206) is for calculating said inclinations (θ1, θ2) responsive to the operational state of said vehicle detected by said state detecting means (S102, S202).

4. An apparatus according to claim 3, wherein said inclination calculating means (S103-S105, S204-S206) is for calculating said inclinations (θ1, θ2) against said reference plane extending in the direction of said optical axis of said vehicle headlight (30) based on said first vertical displacement (HR) of said vehicle at said one longitudinal side and said second vertical displacement (HF) of said vehicle at said other longitudinal side when said state detecting means (S102, S202) detects that said vehicle is in a running state.

5. An apparatus according to claim 4, wherein said inclination calculating means (S103-S105, S204-S206) is for calculating said inclinations by the following Equation:

$$\theta1 = \tan^{-1}\{(HF - HR) / L\}$$

    where HF is said second height displacement, HR is said first displacement, and L is the distance between a front axle and a rear axle of said vehicle.

6. An apparatus according to claim 5, further comprising:

    acceleration detecting means (50) disposed at a front side of said vehicle, for detecting the vertical acceleration (GF) of said vehicle;
    wherein said displacement estimating means (S203) is for estimating said height displacement (HF) at said other longitudinal side based on the detected vertical acceleration (GF) of said vehicle.

7. An apparatus according to claim 3, wherein said inclination calculating means (S204-S206) is for calculating said inclinations (θ1, θ2) based on only said vertical displacement (HR) at said rear side of said vehicle when said state detecting means (S102, S202) detects that said vehicle is in a stopped state.

8. An apparatus according to any one of claims 3 to 7, further comprising:

throttle detecting means (12) for detecting a throttle opening degree (TA) as a state of an internal combustion engine of said vehicle; wherein said state detecting means (S102, S202) is for detecting said state of said vehicle based on the detected state of said internal combustion engine of said vehicle.

9. An apparatus according to any one of claims 3 to 7, further comprising:

vehicle speed detecting means (13) for detecting the vehicle speed (VSP) of said vehicle; wherein said state detecting means (S102, S202) is for detecting said state of said vehicle based on the detected vehicle speed (VSP).

**Patentansprüche**

1. Vorrichtung zum automatischen Steuern einer Richtung einer optischen Achse eines Fahrzeugscheinwerfers (30), wobei die Vorrichtung aufweist:

eine an einer Längsseite eines Fahrzeugs angeordnete Höhenerfassungseinrichtung (11) zum Erfassen eines ersten vertikalen Versatzes (HR) des Fahrzeugs an der einen Längsseite;
eine versatzschätzeinrichtung (S103, S203) zum Schätzen eines zweiten vertikalen Versatzes (HF) an der anderen Längsseite des Fahrzeugs, an der die erste Höhenerfassungseinrichtung (11) nicht angeordnet ist, auf der Grundlage des ersten vertikalen Versatzes (HR) des Fahrzeugs an der einen Längsseite;
eine Neigungsberechnungseinrichtung (S103-S105, S204-S206) zum Berechnen von Neigungen (θ1, θ2) gegenüber einer Bezugsebene, die sich in eine Richtung der optischen Achse des Fahrzeugscheinwerfers ausdehnt, auf der Grundlage des ersten vertikalen Versatzes (HR) des Fahrzeugs an der einen Längsseite des Fahrzeugs und des zweiten vertikalen Versatzes (HF) des Fahrzeugs an der anderen Längsseite des Fahrzeugs; und
eine Steuereinrichtung (S106, F207, 35) zum Steuern der optischen Achse des Fahrzeugscheinwerfers (30) auf der Grundlage von einer der Neigungen (θ2), die von der Neigungsberechnungseinrichtung (S103-S105, S204-S206) berechnet werden, wobei die Höhenerfassungseinrichtung (11) aus einem einzigen Höhensensor besteht.

2. Vorrichtung nach Anspruch 1, wobei die Höhenerfassungseinrichtung (11) an einer Hinterseite des Fahrzeugs angeordnet ist.

3. Vorrichtung nach Anspruch 1 oder 2, die weiterhin aufweist:

eine Zustandserfassungseinrichtung (S102, S202) zum Erfassen eines Betriebszustands des Fahrzeugs;
wobei die Neigungsberechnungseinrichtung (S103-S105, S204-S206) zum Berechnen der Neigungen (θ1, θ2) als Reaktion auf den Betriebszustand des Fahrzeugs dient, der von der Zustandserfassungseinrichtung (S102, S202) erfaßt wird.

4. Vorrichtung nach Anspruch 3, wobei die Neigungsberechnungseinrichtung (S103-S105, S204-S206) zum Berechnen der Neigungen (θ1, θ2) gegenüber der Bezugsebene, die sich in die Richtung der optischen Achse des Fahrzeugscheinwerfers (30) ausdehnt, auf der Grundlage des ersten vertikalen Versatzes (HR) des Fahrzeugs an der einen Längsseite und des zweiten vertikalen Versatzes (HF) des Fahrzeugs an der anderen Längsseite dient, wenn die Zustandserfassungseinrichtung (S102, S202) erfaßt, daß sich das Fahrzeug in einem fahrenden Zustand befindet.

5. Vorrichtung nach Anspruch 4, wobei die Neigungsberechnungseinrichtung (S103-S105, S204-S206) zum Berechnen der Neigungen durch die folgende Gleichung dient:

$$\theta 1 = \tan^{-1}\{(HF - HR)/L\}$$

wobei HF der zweite Höhenversatz ist, HR. der erste Versatz ist und L der Abstand zwischen einer Vorderachse und einer Hinterachse des Fahrzeugs ist.

6. Vorrichtung nach Anspruch 5, die weiterhin aufweist:

eine an einer Vorderseite des Fahrzeugs angeordnete Beschleunigungserfassungseinrichtung (50) zum Erfassen der Vertikalbeschleunigung (GF) des Fahrzeugs,
wobei die Versatzschätzeinrichtung (5203> zum Schätzen des Höhenversatzes (HF) an der anderen Längsseite auf der Grundlage der erfaßten Vertikalbeschleunigung (GF) des Fahrzeugs dient.

7. Vorrichtung nach Anspruch 3, wobei die Neigungsberechnungseinrichtung (S204-S206) zum Berechnen der Neigungen (θ1, θ2) auf der Grundlage lediglich des vertikalen Versatzes (HR) an der Hinterseite des Fahrzeugs dient, wenn die Zustandserfassungseinrichtung (S102, S202) erfaßt, daß sich das Fahrzeug in einem stehenden Zustand befindet.

8. Vorrichtung nach einem der Ansprüche 3 bis 7, die weiterhin aufweist:

   eine Drosselerfassungseinrichtung (12) zum Erfassen eines Drosselöffnungsgrads (TA) als einen Zustand einer Brennkraftmaschine des Fahrzeugs;
   wobei die Zustandserfassungseinrichtung (S102, S202) zum Erfassen des Zustands des Fahrzeugs auf der Grundlage des erfaßten Zustands der Brennkraftmaschine des Fahrzeugs dient.

9. Vorrichtung nach einem der Ansprüche 3 bis 7, die weiterhin aufweist:

   eine Fahrzeuggeschwindigkeitserfassungseinrichtung (13) zum Erfassen der Fahrzeuggeschwindigkeit (VSP) des Fahrzeugs;
   wobei die Zustandserfassungseinrichtung (S102, S202) zum Erfassen des Zustands des Fahrzeugs auf der Grundlage der erfaßten Fahrzeuggeschwindigkeit (VSP) dient.

## Revendications

1. Appareil pour commander automatiquement la direction d'un axe optique d'un phare de véhicule (30), ledit appareil comprenant :

   un moyen de détection de hauteur (11) disposé au niveau d'un côté longitudinal du véhicule, pour détecter un premier déplacement vertical (HR) dudit véhicule au niveau dudit premier côté longitudinal ;

   un moyen d'estimation de déplacement (S103, S203) pour estimer un second déplacement vertical (HF) au niveau de l'autre côté longitudinal dudit véhicule où ledit moyen de détection de hauteur (11) n'est pas disposé, sur la base dudit premier déplacement vertical (HR) dudit véhicule audit premier côté longitudinal ;

   un moyen de calcul d'inclinaison (S103 à S105, S204 à S206) pour calculer des inclinaisons (θ1, θ2) par rapport à un plan de référence s'étendant dans une direction dudit axe optique dudit phare de véhicule sur la base dudit premier déplacement vertical (HR) dudit véhicule au niveau dudit premier côté longitudinal dudit véhicule et dudit second déplacement vertical (HF) dudit véhicule au niveau dudit autre côté longitudinal dudit véhicule ; et

   un moyen de commande (S106, S207, 35) pour commander ledit axe optique dudit phare du véhicule (30) sur la base d'une desdites inclinaisons (θ2) calculée par ledit moyen de calcul d'inclinaison (S103 à S105, S204 à S206)

   dans lequel ledit moyen de détection de hauteur (11) est constitué d'un seul capteur de hauteur.

2. Appareil selon la revendication 1, dans lequel ledit moyen de détection de hauteur (11) est disposé au niveau du côté arrière dudit véhicule.

3. Appareil selon la revendication 1 ou 2, comprenant en outre :

   un moyen de détection d'état (S102, S202) pour détecter un état opérationnel dudit véhicule ;

   dans lequel ledit moyen de calcul d'inclinaison (S103 à S105, S204 à S206) est destiné à calculer lesdites inclinaisons (θ1, θ2) en réponse audit état opérationnel dudit véhicule détecté par ledit moyen de détection d'état (S102, S202).

4. Appareil selon la revendication 3, dans lequel ledit moyen de calcul d'inclinaison (S103 à S105, S204 à S206) est destiné à calculer lesdites inclinaisons (θ1, θ2) par rapport audit plan de référence s'étendant dans la direction dudit axe optique dudit phare du véhicule (30) sur la base dudit premier déplacement vertical (HR) dudit véhicule au niveau dudit premier côté longitudinal et dudit second déplacement vertical (HF) dudit véhicule au niveau dudit autre côté longitudinal lorsque ledit moyen de détection d'état (S102, S202) détecte que ledit véhicule est dans un état de déplacement.

5. Appareil selon la revendication 4, dans lequel ledit moyen de calcul d'inclinaison (S103 à S105, S204 à S206) est destiné à calculer lesdites inclinaisons par l'équation suivante :

$$\theta 1 = \tan^{-1}\{(HF-HR) / L\}$$

   dans laquelle HF est ledit second déplacement en hauteur, HR est ledit premier déplacement et L est la distance entre un essieu avant et un essieu arrière dudit véhicule.

**6.** Appareil selon la revendication 5, comprenant en outre :

un moyen de détection d'accélération (50) disposé au niveau du côté avant dudit véhicule; pour détecter l'accélération verticale (GF) dudit véhicule ;

dans lequel ledit moyen d'estimation de déplacement (S203) est destiné à estimer ledit déplacement en hauteur (HF) au niveau de l'autre côté longitudinal sur la base de l'accélération verticale détectée (GF) dudit véhicule.

**7.** Appareil selon la revendication 3, dans lequel ledit moyen de calcul d'inclinaison (S204 à S206) est destiné à calculer lesdites inclinaisons ($\theta$1, $\theta$2) sur la base, dudit seul déplacement vertical (HR) au niveau dudit côté arrière dudit véhicule lorsque ledit moyen de détection d'état (S102, S202) détecte que ledit véhicule est à un état arrêté.

**8.** Appareil selon l'une quelconque des revendications 3 à 7, comprenant en outre :

un moyen de détection de soupape d'étranglement (12) pour détecter un degré d'ouverture de soupape d'étranglement (TA) comme un état du moteur à combustion interne dudit véhicule ;

dans lequel ledit moyen de détection d'état (S102, S202) est destiné à détecter ledit état dudit véhicule sur la base de l'état détecté dudit moteur à combustion interne dudit véhicule.

**9.** Appareil selon l'une quelconque des revendications 3 à 7, comprenant en outre

Un moyen de détection de vitesse du véhicule (13) pour détecter la vitesse du véhicule (VSP) dudit véhicule ; dans lequel ledit moyen de détection d'état (S102, S202) est destiné à détecter ledit état dudit véhicule sur la base de la vitesse du véhicule détecté (VSP).

EP 0 803 401 B1

# FIG.1

# FIG.2

9

# FIG.3

# FIG.5

*FIG. 4*

```
                    ┌─────────┐
                    │  START  │
                    └────┬────┘
                         │                          S101
        ┌────────────────▼───────────────────┐
        │  READ  EACH SENSOR SIGNAL           │
        │  ┌──────────────────────────────┐   │
        │  │ VEHICLE SPEED SIGNAL VSP      │   │
        │  └──────────────────────────────┘   │
        │  ┌──────────────────────────────┐   │
        │  │ REAR  HEIGHT SIGNAL HR        │   │
        │  └──────────────────────────────┘   │
        │  ┌──────────────────────────────┐   │
        │  │ THROTTLE  OPENING             │   │
        │  │ DEGREE SIGNAL TA              │   │
        │  └──────────────────────────────┘   │
        │              ⋮                       │
        └────────────────┬────────────────────┘
                         │
      S102               ▼          YES
              ◇── VSP=0 ? ──────────────────────┐
              │                                  │
              │ NO         S103                  │        S104
    ┌─────────▼──────────────────┐   ┌──────────▼───────────────────┐
    │ CALCULATE  PITCH ANGLE θ1   │   │ CALCULATE  PITCH ANGLE θ1     │
    │ ┌────────────────────────┐  │   │ ┌──────────────────────────┐ │
    │ │ △W=HR×KR×2  ⋯(1)        │  │   │ │ HF=HR×α    ⋯(4)           │ │
    │ └────────────────────────┘  │   │ └──────────────────────────┘ │
    │ ┌────────────────────────┐  │   │                              │
    │ │ HF=−(HR×KR)/KF ⋯(2)     │  │   │                              │
    │ └────────────────────────┘  │   │                              │
    │ ┌────────────────────────┐  │   │ ┌──────────────────────────┐ │
    │ │ θ1=tan⁻¹((HF−HR)/L)     │  │   │ │ θ1=tan⁻¹((HF−HR)/L)       │ │
    │ │           ⋯(3)          │  │   │ │             ⋯(3)          │ │
    │ └────────────────────────┘  │   │ └──────────────────────────┘ │
    └─────────────┬───────────────┘   └──────────────┬───────────────┘
                  └──────────────┬──────────────────┘
                                 ▼           S105
                        ┌─────────────────┐
                        │  θ2≒−θ1         │
                        └────────┬────────┘
                                 ▼              S106
                        ┌─────────────────┐
                        │ OPERATE ACTUATOR │
                        └────────┬────────┘
                                 ▼
                            ┌────────┐
                            │  RET   │
                            └────────┘
```

Step S103:
$$\triangle W = HR \times KR \times 2 \quad \cdots (1)$$
$$HF = -(HR \times KR)/KF \quad \cdots (2)$$
$$\theta 1 = \tan^{-1}((HF - HR)/L) \quad \cdots (3)$$

Step S104:
$$HF = HR \times \alpha \quad \cdots (4)$$
$$\theta 1 = \tan^{-1}((HF - HR)/L) \quad \cdots (3)$$

Step S105:
$$\theta 2 \fallingdotseq -\theta 1$$

*FIG.6*

START

READ EACH SENSOR SIGNAL — S201

VEHICLE SPEED SIGNAL VSP

ACCELERATION SIGNAL GF

REAR HEIGHT SIGNAL HR

THROTTLE OPENING DEGREE SIGNAL TA

⋮

S202

VSP=0 ? — YES

NO

CALCULATE FRONT HEIGHT HF — S203

$$HF = \iint GF \quad \cdots (5)$$

CALCULATE PITCH ANGLE $\theta 1$ — S204

$$HF = -(HR \times KR)/KF \cdots (2)$$

$$\theta 1 = \tan^{-1}((HF - HR)/L) \cdots (3)$$

CALCULATE PITCH ANGLE $\theta 1$ — S205

$$HF = HR \times \alpha \quad \cdots (4)$$

$$\theta 1 = \tan^{-1}((HF - HR)/L) \cdots (3)$$

$$\theta 2 = -\theta 1$$ — S206

OPERATE ACTUATOR — S207

RET

12